Europäisches Patentamt

(19) European Patent Office

Office européen des brevets

(11) Publication number: **0 115 395**
**B1**

(12) **EUROPEAN PATENT SPECIFICATION**

(45) Date of publication of patent specification: **29.08.90**

(21) Application number: **84300254.4**

(22) Date of filing: **17.01.84**

(51) Int. Cl.⁵: **G 06 F 9/30, G 06 F 13/00**

(54) **Computer processor system with software protection.**

(30) Priority: **26.01.83 GB 8302096**

(43) Date of publication of application:
**08.08.84 Bulletin 84/32**

(45) Publication of the grant of the patent:
**29.08.90 Bulletin 90/35**

(84) Designated Contracting States:
**BE DE FR GB NL SE**

(56) References cited:
**US-A-3 806 882**
**US-A-4 087 856**
**US-A-4 118 789**
**US-A-4 306 289**

(73) Proprietor: **INTERNATIONAL COMPUTERS LIMITED**
**ICL House**
**Putney, London, SW15 1SW (GB)**

(72) Inventor: **Cole, Terence Michael**
**12 Rosecroft Way**
**Shinfield Reading RG2 9AP (GB)**
Inventor: **Sheppard, Keith Reginald**
**76 Harmans Water Road**
**Bracknell Berks. RG12 3NY (GB)**

(74) Representative: **Broadie, Roger Gaymer et al**
**STC Patents West Road**
**Harlow Essex CM20 2SH (GB)**

Courier Press, Leamington Spa, England.

## Description

This invention relates to computer systems with software protection means.

Computer programs falls into two broad classes. First, there are the user's own programs, usually written specifically by him, and intended to carry out his own applications. Secondly, there are programs written by an external supplier such as the computer manufacturer and intended to carry out tasks which apply to a number of users of the system. The supplier often regards such a program as proprietary and wishes to restrict its use to those he specifically authorises, for example in return for the payment of a licence fee on which the economics of writing the program depend. However, a computer program can be easily copied and come into the hands of unauthorised persons who thereafter use the program but escape any conditions imposed on its use. This is a well-known problem often referred to as "software piracy". It has consequently been recognised that it is desirable to include in the computer system software protection means which present a barrier to the use with the system of programs not authorised to be executed by it.

One approach is to protect the program by encrypting it in some way so that only the possessor of a computer with suitable decrypting equipment can execute the program. Thus it has been proposed in US Patent Specification No. 4,120,030 (Johnstone) and US Patent Specification No. 4,278,837 (Best) to encrypt respectively operand addresses and whole program instructions. The decryption is then carried out as the program is executed. The disadvantage of this approach is that it prevents the use of ordinary unencrypted instructions and thus complicates the use of the computer with the user's own programs.

A solution to this problem is disclosed in US Patent Specification No. 4,246,638 (Thomas). That specification proposes, among other arrangements, one in which the system can operate in either a protected or an unprotected mode. In the former, operation codes are enciphered and cannot be used without a deciphering ROM supplied by the manufacturer. In the latter, which may be used by the user for his programs, instructions are unenciphered and obeyed as they stand. To change from one mode to the other special instructions are used the effect of which is to cause the processor to switch modes. The use of such instructions complicates the programming and reduces its speed of execution. US Patent Specification No. 4,087,856 (Attanasio) adds a plurality of hardware registers to the CPU to identify those locations in main storage from which specified privileged operations can be validly executed. When the instruction decoder in the CPU recognizes a privileged instruction, the instruction counter value is compared with the allowed address for that instruction. Such an instruction is not available to the user. The object of this invention is to overcome these disadvantages.

This invention provides a computer processor system having an instruction format including a field the size of which is greater than is required to specify its effect within the computer system, the system being such that for each of some (unprotected) values of the field an instruction containing that value of the field will be executed whenever it occurs but for each of other (protected) values of the field an instruction containing that value of the field will be executed only if the system has been specifically enabled in respect of that value by information input into the system from a removable and/or external source, some at least of the instructions containing protected values of the field each being executed in the same way as an instruction containing an unprotected value of the field.

Programs including instructions containing protected values of the field will be executed only if all those values are enabled. A supplier may therefore write a program using such instructions and, provided he retains control of the supply of the enabling information, restrict the use of the program to those he wishes to authorise, to whom he will supply the enabling information. On the other hand the user may write programs restricted to instructions in which the field always has an unprotected value and those programs will be executed normally. The two types of instruction may be mixed, so the user may introduce sections of his own program instructions into an authorised program, which will continue to be executable. Since the protected and unprotected values are distinct there is no need to include special mode-switching instructions, and no time is taken in executing them.

Preferably there is provision for the attachment, as, or as part of, the source of enabling information, of a plurality of removable devices each containing information indicating protected values to be enabled. With this arrangement each such device may indicate all those values required for a particular program. The system may therefore be authorised to run a plurality of protected programs by having attached to it the appropriate devices and the processor will be able to switch from one program to another without special instructions.

An example of a system constructed in accordance with the invention will now be described in greater detail with reference to the accompanying drawings, in which:

Figure 1 is a block diagram of the overall system;

Figure 2 is a diagram showing part of an illustrative instruction format; and

Figure 3 is a block diagram of the protection unit of the system.

Overall system

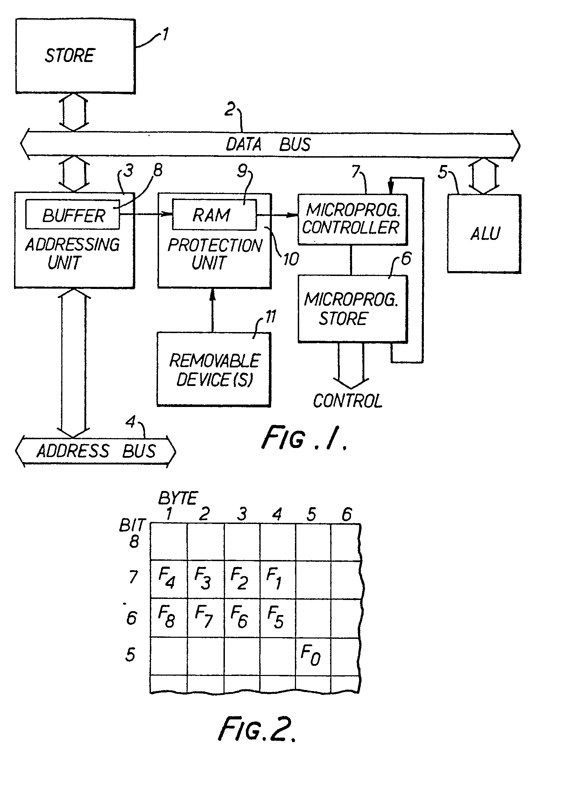

Referring to Figure 1, the system has a store 1 connected to a data bus 2. The store 1 contains both program instructions and data and is accessed by an addressing unit 3 through an address bus 4. The addressing unit 3 calculates store addresses for both data and program instructions and holds retrieved program instructions.

Retrieved operands are passed to an arithmetic and logic unit (ALU) 5 for the appropriate manipulation. Control signals for the various parts of the system are derived from the output of a microprogram store 6 accessed by a microprogram controller 7, which receives as one of its inputs indications of the state of various parts of the system.

When a new program instruction is retrieved by the addressing unit 3 its function code is held in a buffer 8. The output of the buffer 8 addresses a memory 9 in a protection unit 10. In normal operation the memory 9 outputs in response a selection signal which in this case is microprogram step number which is passed to the microprogram controller 7 to indicate the address in the microprogram store 6 of the microinstruction, or the first of the sequence of microinstructions, corresponding to the program instruction concerned. The instruction will then be executed under the control of signals derived from the microprogram store 6.

The system contains input/output units (not shown) as required.

The various parts of the system so far described, with the exception of the protection unit 10, carry out well-known functions and may be constructed in ways well known to a skilled person in the field. They will therefore not be described in more detail.

The normal computer instruction includes a field for the function code (alternatively known as the operation code) which specifies the function (add, compare, etc) to be carried out. In this system the instruction format includes a field containing the function code and having more bits than are required to specify its effect. There are therefore more possible values of the function code than there are functions to be selected. One set of possible values will be termed "unprotected": the memory 9 will always output the correct step number when one of these values is met, and the corresponding instruction will therefore always be obeyed correctly. These values of the function code are the ones used in programs written by the user of the system, which therefore run unhindered. A second set of possible values will be termed "protected": each duplicates the effect of one of the unprotected set, but when it is met the memory 9 will output the correct step number only if it has been specifically enabled for that function code in response to information contained in a removable device 11. A selection of these values may be used in a program from an external supplier, who when he authorises a user to use the program will at the same time supply the removable device to cause the system to be enabled to obey the values used in that program. Only when the device is present will the program run correctly.

Instruction format

The instruction format will now be described with reference to Figure 2.

Each instruction has a number of bytes. Certain bit positions, denoted in Figure 2 by the references $F_0$ to $F_8$, are dedicated to the function code. Other bit positions are used for other fields of the instruction, which are not shown because they are not relevant to the use of the invention in the example being described and may in any case vary from function to function.

It will be assumed, purely as an illustration, that the system is capable of executing 32 different functions and has, as shown, nine bit positions for the function code. Nine bits allow 512 different values for the function code. 32 are used as unprotected function codes, one for each possible function. The remaining 480 are available as protected function codes. Each is given the same meaning as one of the unprotected function codes, and can be regarded as an "alias" of the unprotected function code. Every unprotected function code has a number of aliases.

The 32 functions are each given a five-bit identifier, from which the corresponding unprotected function code is derived in a simple manner. First, the identifier itself is incorporated as bits $F_4$ to $F_0$. Then the remaining bits are derived by making each bit 6 that appears in the function code the inverse of bit 7 of the same byte. That is, $F_8$ to $F_5$ are $\overline{F}_4$ to $\overline{F}_1$ respectively. Hence if "add" has the identifier 01001 its full unprotected function code becomes

$$(F_8, F_7, F_6, F_5, F_4, F_3, F_2, F_1, F_0) = (1,0,1,1,0,1,0,0,1)$$

(In subsequent examples it will be assumed that the bits $F_8$ to $F_0$ are given in the same order as here.)

The protected function codes are assigned to the different functions arbitrarily so that the corresponding function identifier cannot be derived in any obvious way from the value of the code. For example, continuing the example given above, "add" might in addition be represented by the following two protected function codes (as well as others):

$$(1,1,0,1,0,0,0,0,1)$$

$$(0,1,0,1,1,0,0,1,1)$$

Protection unit

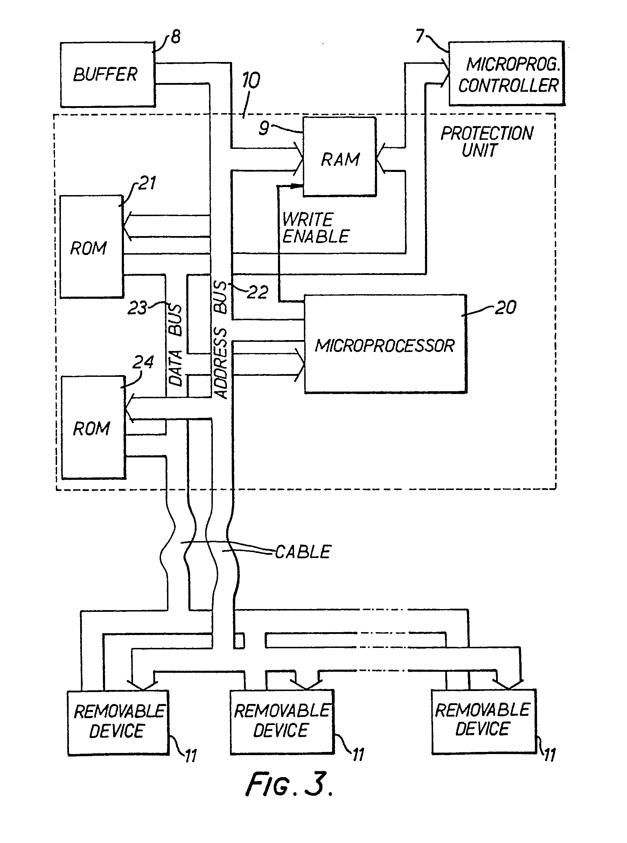

The protection unit 10 will now be described in greater detail with reference to Figure 3.

In normal operation of the system, as each instruction is retrieved the bits of the function-code field (which as Figure 2 shows need not be contiguous in the instruction) are assembled in the buffer 8. They then pass to the protection unit 10, where they are supplied as an address to the memory 9, a random-access memory (RAM) which at this stage is enabled to be read.

Provided the function code is unprotected, or is one of the currently enabled protected function codes, the addressed location holds, as has been explained, the corresponding microprogram step-number, which is output and passed to the microprogram controller 6 to bring about execution of the instruction in which the function code occurred.

The step numbers of those function codes that are to be enabled are written into the memory 9 during an initialisation procedure carried out by a microprocessor 20 whenever the system is powered up. The program and data for the microprocessor 20 are held in a read-only memory (ROM) 21.

The microprocessor 20 learns which protected function codes are to be enabled from the removable devices 11 that are present. Each device 11 is a programmable read-only memory (PROM) which is plugged into one a set of sockets accessible to the user. The sockets are connected in parallel by cable to an address bus 22 and a data bus 23 in the protection unit 10.

Each device is associated with a particular program to be executed by the system. It contains, in an encrypted form, each protected function code used in that program with, appended to it, the identifier of the function it represents. The encryption may, as an illustration, be carried out by modulo-2 summation of the bits of this quantity with the corresponding bits of a key consisting of a machine identifier unique to the system and held in a PROM 24. The removable devices 11 are therefore personalized to the system concerned.

The following table shows, as an example, the encryption in this manner of the quantity held for the first of the protected aliases of "add" given above.

|  | function code | function identifier |
|---|---|---|
| unencrypted quantity | 110100001 | 01001 |
| machine identifier | 000111111 | 00001 |
| encrypted quantity | 110011110 | 01000 |

Decryption then consists of the modulo-2 summation of the bits of the machine identifier with the corresponding bits of encrypted quantity.

The procedure for initialisation is as follows.

1. The microprocessor generates each unprotected function code in turn from its function identifier. It obtains the microprogram number corresponding to the function identifier from a table held in the ROM 21 and writes that value into the location whose address is the function code.

2. For each device 11 in turn it reads out each quantity held, decrypts it to obtain the corresponding function code and its identifier, obtains the corresponding step number from the table in the ROM 21 and writes that value into the location whose address is the decrypted function code.

3. It then inserts a pseudo-random step number into each location of the RAM 9 that has not been loaded in either of the preceding steps.

The system has therefore been enabled to respond correctly to all unprotected function codes and those protected function codes specifically identified in any of the removable devices.

The protection unit 10 is made as far as practicable physically secure so that the user cannot obtain access to its circuits.

General aspects

The following illustrates, by way of example, one way in which the system so far described with reference to the drawings may be employed as part of a general scheme for software protection.

Assemblers and compilers supplied to the user output instructions using unprotected values for the function code to ensure that his programs are executed unhindered by the presence of the protection unit 10.

The system supplier makes a once-for-all random assignment of protected function codes to functions, giving each function a number of aliases roughly proportional to the frequency with which it is used. Then, when he wishes to protect a program, he selects a certain number of aliases for each function. These form the set of protected function codes used in the program; it must not be identical to the set used for any other program. The program is initially prepared using function identifiers, and is then encoded by replacing each function identifier with a function code chosen at random from those that represent the function and have been selected for use in the program. The result is the protected version of the program that is given to authorised users.

Assigning and selecting between function codes in the manner described gives an approximately equal rate of usage of function codes, with the aim of hindering the making of deductions about the meaning of the protected function codes by analysing the program in its protected form.

Restricted sets of protected function codes and their meanings may be made available to trusted third-party suppliers of software so that they can use the protection feature included in the system. But apart from this the supplier takes care to keep the meaning of the protected function codes secret and it is preferable for him to be the sole supplier of removable devices since they require knowledge of the machine identifier.

When a user is to be authorised to use a protected program a removable device is prepared for him encrypting the set of protected function codes used in the program together with their identifiers using as a key the machine identifier of the system on which it is to be authorised to run. The user then plugs the device into his system in addition to any already present. It may then remain permanently in place so that, as far as the user is concerned, the program runs in a normal fashion.

If an attempt is made to run the protected program on a system which is not authorised to use it (that is, which does not have the appropriate removable device) the program will fail when it reaches an instruction using a function code that has not been enabled. Since the RAM 9 will have a random step numbsr at this point the program will fail in an unpredictable way, which also makes it difficult to make deductions about the program from the way it failed.

Since the removable device is specific to the intended system it is not possible to circumvent the protection by moving both the program and the device to another system.

The user may combine program sections he has written with protected program sections he is authorised to use and the combined program will be executed as it stands. There is no need to include special instructions to switch the processor between a protected and an unprotected mode and no time will be wasted retrieving and obeying such instructions.

When protected programs and the accompanying removable devices are prepared as described the same version of the program is supplied to all users. That has the advantage that modifications or updates of the software can be prepared, using the appropriate protected function codes, without the need to personalise each copy for its intended user, a process which would make the issue of the software much less convenient. Personalisation takes place once only, in preparing the removable device which thereafter serves to authorise the use of the subsequent issues.

Modifications

Greater security of protection can be achieved at the cost of greater complexity. For example, a more elaborate encryption of the contents of the removable devices 11 can be used if the protection device 10 is equipped to decrypt it. The removable devices may include date information defining the period for which the user is authorised to use the program. This information would be checked by the microprocessor 20 against a real-time clock during initialisation and the corresponding function codes enabled only if the period of use had not expired. Enabling information could be sent over a communications link by the supplier, for example to update the period for which use of the program is authorised, or to override the protection to allow engineering work to be carried out or the program to be run on a back-up machine.

Alternatively if a lower level of protection is acceptable the protection system could be simplified, for example by omitting the machine identity PROM 24. In this case the removable devices would not be encrypted and hence not unique to the system.

In the system described every function has both protected and unprotected function codes. But the two sets need not be identical. For example, some functions might not have an unprotected function code. They would then only be usable if authorised.

It is convenient but not essential to derive the unprotected function codes from the function identifiers in a systematic way, as for example in the system described with reference to the drawings.

The organisation shown in Figure 1 can be modified in any suitable way, for example to use a dedicated instruction fetching unit. The significant feature is the way the protection unit 10 is introduced. Indeed many existing computer designs could be modified to use the protection feature provided they allow use of an expanded function-code field. In designs where that is not possible it will often be possible to modify the design so that the extra bits for an expanded function code are fetched and loaded separately, either from an alternative address derived with the aid of the address of the original instruction, or from a separate "parallel" memory area.

Other fields of the instruction could be used for protection. For example, the index-register field could be used in the place of the function code field. It would thereofre be expanded to allow protected as well as unprotected values. In this case only those instruction formats including an index register field would be subject to protection and the protection unit would control the selection of the required index register.

Claims

1. A computer processor system having protection means (10) responsive to retrieved instructions to allow the said instructions to be executed only in the presence of enabling information input into the computer system from a removable and/or external source (11), characterised in that the system has an instruction format including a field ($F_0$ to $F_8$) the size of which is greater than is required to specify its effect within the processor system, the protection means (10) being responsive to each of an unprotected set of values of the said field to allow an instruction containing that value to be executed whenever it occurs and being responsive to each of a protected set of values of the field to allow an instruction containing that value to be executed only if specifically enabled in respect of that value by information input into the system from the said source (11), some at least of the instructions containing protected values of the field each having the same effect as an instruction containing an unprotected value of the field.

2. A system as claimed in Claim 1, in which there is provision for the attachment of a plurality of different removable devices (11) as, or as part of, the said source of enabling information, whereby each removable device may enable a different set of protected values from any other removable device.

3. A system as claimed in Claim 1 or Claim 2 in which the protection means (10) contains look-up means (9) responsive to an addressing signal derived from the value of the said field to output a control signal for means (5, 6, 7) for executing program instructions, the look-up means (9) containing at each address corresponding to an unprotected value of the field and at only those addresses corresponding to protected values of the field, a value indicative of the control signal to be output.

4. A system as claimed in Claim 3, in which the protection means (10) contains means (20, 21) responsive to information derived from the said source (11) to write into the look-up means (9), at each address corresponding to an unprotected value of the said field and at only those addresses defined by information derived from the said source (11), the required values to cause the corresponding instructions to be executed correctly.

5. A system as claimed in any one of the preceding claims, in which the information derived from the said source (11) defines each protected value to be enabled and indicates its effect.

6. A system as claimed in Claim 5, in which the said information is encrypted and the protection means contains means (20, 21, 24) for decrypting the said information.

7. A system as claimed in any one of the preceding claims, in which the said field holds the function code of the instruction.

## Patentansprüche

1. Computer-Verarbeitungssystem mit einer Schutzvorrichtung (10), die auf wiederaufgefundene Instruktionen anspricht, damit diese Instruktionen nur bei Vorhandensein einer Freigabeinformation ausgeführt werden, die in das Computersystem aus einer entfernbaren und/oder externen Quelle (11) eingegeben wird, dadurch gekennzeichnet, daß das System ein Instruktionsformat hat, das ein Feld $(F_0—F_8)$ aufweist, dessen Dimensionen größer sind als erforderlich, um den Einfluß innerhalb des Verarbeitungssystems zu spezifizieren, daß die Schutzvorrichtung (10) auf jeden Wert eines ungeschützten Satzes von Werten des Feldes anspricht, damit eine diesen Wert enthaltende Instruktion ausgeführt werden kann, wenn sie auftritt, und auf jeden Wert eines geschützten Satzes von Werten des Feldes anspricht, damit eine diesen Qert enthaltende Instruktion nur dann ausgeführt wird, wenn sie in spezifischer Weise in Hinblick auf diesen Wert durch eine Informationseingabe in das System aus dieser Quelle (11) freigegeben wird, wobei mindestens einige der Instruktionen geschützte Werte des Feldes enthalten, deren jede den gleichen Effekt wie eine einen ungeschützten Wert des Feldes enthaltende Instruktion hat.

2. System nach Anspruch 1, bei dem Vorkehrungen für die Verbindung einer Vielzahl von unterschiedlichen, entfernbaren Vorrichtungen (11) als die Quelle oder als Teil der Quelle der Freigabeinformation getroffen sind, wobei jede entfernbare Vorrichtung einen anderen Satz von geschützten Werten aus einer beliebigen anderen entfernbaren Vorrichtung wirksam machen kann.

3. System nach Anspruch 1 oder 2, bei dem die Schutzvorrichtung (10) eine Nachschlagevorrichtung (9) aufweist, die auf ein Adressiersignal anspricht, das aus dem Wert des Feldes abgeleitet wird, um ein Steuersignal für die Vorrichtung (5, 6, 7) zur Ausführung von Programminstruktionen abzugeben, wobei die Nachschlagevorrichtung (9) bei jeder Adresse, die einem ungeschützten Wert des Feldes entspricht, und bei nur den Adressen, die geschützten Werten des Feldes entsprechen, einen Wert enthält, der das abzugebende Steuersignal anzeigt.

4. System nach Anspruch 3, bei dem die Schutzvorrichtung (10) eine Vorrichtung (20, 21) aufweist, die auf Informationen anspricht, die aus der Quelle (11) abgeleitet werden, um in die Nachschlagevorrichtung (9) bei jeder Adresse, die einem ungeschützten Wert des Feldes entspricht, und bei nur den Adressen, die durch aus der Quelle (11) abgelieteten Informationen definiert sind, die gewünschten Werte einzuschreiben, damit die entsprechenden Instruktionen einwandfrei ausgeführt werden.

5. System nach einem der vorausgehenden Ansprüche, bei dem die aus der Quelle (11) abgeleitete Information jeden geschützten, freizugebenden Wert festlegt und seinen Einfluß anzeigt.

6. System nach Anspruch 5, bei dem die Information verschlüsselt ist und die Schutzvorrichtung eine Vorrichtung (20, 21, 24) zum Entschlüsseln der Information enthält.

7. System nach einem der vorausgehenden Ansprüche, bei dem das Feld den Funktionscode der Instruktion hält.

## Revendications

1. Système de traitement par ordinateur comportant un moyen de protection (10) réagissant à des instructions extraites pour permettre l'exécution des instructions uniquement en présence d'informations de validation introduites dans le système ordinateur à partir d'une source amovible et/ou extérieure (11), caractérisé en ce que le système comporte un format d'instruction incluant une zone $(F_0$ à $F_8)$ dont la longueur est supérieure à ce qui est nécessaire pour spécifier son effet dans le système de traitement, le moyen de protection (10) réagissant à chacune d'un groupe de valeurs non protégées de la zone pour permettre l'exécution d'une instruction contenant cetts valeur chaque fois qu'elle apparaît et réagissant à chacune d'un groupe de valeurs protégées de la zone pour permettre l'exécution d'une instruction contenant cette valeur uniquement si elle est spécifiquement validée par rapport à cette valeur par des informations introduites dans le système à partir de la source (11), certaines au moins des instructions contenant des valeurs protégées de la zone ayant chacune le même effet qu'une instruction contenant une valeur non protégée de la zone.

2. Système selon la revendication 1, dans lequel il est prévu le rattachement d'un ensemble de dispositifs amovibles (11) différents comme, ou comme partie de, source d'informations de validation, chaque dispositif amovible pouvant ainsi valider un groupe différent de valeurs protégées à partir de tout autre dispositif amovible.

3. Système selon l'une quelconque des revendications 1 et 2, dans lequel le moyen de protection (10) contient un moyen de recherche (9) réagissant à un signal d'adressage dérivé de la valeur de la zone pour sortir un signal de commande de moyens (5, 6, 7) destinés à exécuter des instructions de programme, le moyen de rechercher (9) contenant à chaque adresse correspondant à une valeur non protégée de la zone et seulement aux adresses correspondant aux valeurs protégées de la zone, une valeur indiquant le signal de commande à sortir.

4. Système selon la revendication 3, dans lequel le moyen de protection (10) contient des moyens (20, 21) réagissant aux informations dérivées de la source (11) pour exécuter une écriture dans le moyen de recherche (9), à chaque adresse correspondant à une valeur non protégée de la zone et uniquement aux adresses définies par les informations dérivées de la source (11), les valeurs nécessaires pour faire en sorte que soient exécutées correctement les instructions correspondantes.

5. Système selon l'une quelconque des revendications 1 à 4, dans lequel les informations dérivées de la source (11) définissent chaque valeur protégée à valider et indiquent son effet.

6. Système selon la revendication 5, dans lequel les informations sont chiffrées et le moyen de protection contient des moyens (20, 21, 24) pour déchiffrer les informations.

7. Système selon l'une quelconque des revendications 1 à 6, dans lequel la zone contient le code de fonction de l'instruction.

FIG. 1.

FIG. 2.

FIG. 3.